# EUROPEAN PATENT APPLICATION

(11) **EP 3 226 370 A1**
(43) Date of publication of application: **04.10.2017**
(21) Application number: 15863123.4
(22) Date of filing: 27.11.2015
(51) Int. Cl.: H02J 3/14, H02J 3/32, H02J 3/38, H02J 9/06

(54) **POWER CONTROL DEVICE, POWER CONTROL METHOD, AND POWER CONTROL SYSTEM**

(30) Priority: 27.11.2014 JP 2014240354
(71) Applicant: Kyocera Corporation, Kyoto-shi, Kyoto 612-8501 (JP)
(72) Inventor: OKINO, Kenta, Kyoto-shi Kyoto 612-8501 (JP)
(74) Representative: Schwabe - Sandmair - Marx
(86) International application number: PCT/JP2015/005933
(87) International publication number: WO 2016/084396

(57) **Abstract**

A power control apparatus (3) is capable of monitoring a driving condition of at least one load device and includes a controller (31) that calculates a storage cell remaining amount to be ensured in case of a blackout, the controller (31) calculating the storage cell remaining amount on the basis of a predicted power demand of the load device to be used during a blackout and at least one of a degree of urgency and an incentive of a demand response request.

## Description

### CROSS-REFERENCE TO RELATED APPLICATION

This application claims priority to and the benefit of Japanese Patent Application No. 2014-240354 filed November 27, 2014, the entire contents of which are incorporated herein by reference.

### TECHNICAL FIELD

The present disclosure relates to a power control apparatus, a power control method, and a power control system.

### BACKGROUND

There are known systems that charge a storage cell (secondary battery) from a power generation apparatus when power usage is less than the power supply and no power supply from the power grid is necessary. Conversely, when power needs to be supplemented, these systems immediately discharge the storage cell (for example, see JP 2003-032899 A (PTL 1)).

### CITATION LIST

### Patent Literature

PTL 1: JP 2003-032899 A

### SUMMARY

### (Technical Problem)

In PTL 1, however, the system needs to be improved so as to more appropriately control the storage cell with respect to the power supply state from the commercial power grid. Hence, there is a demand for controlling the storage cell more economically with respect to the power supply state of the commercial power grid.

Therefore, it would be helpful to provide a power control apparatus, a power control method, and a power control system that can control a storage cell more economically with respect to the power supply state of the commercial power grid.

### (Solution to Problem)

A power control apparatus according to one of the embodiments of the present disclosure is capable of monitoring a driving condition of at least one load device, the power control apparatus including:
a controller configured to calculate a storage cell remaining amount to be ensured in case of a blackout, the controller calculating the storage cell remaining amount on the basis of a predicted power demand of the load device to be used during a blackout and at least one of a degree of urgency and an incentive of a demand response request.

A power control method according to one of the embodiments of the present disclosure is used in a power control apparatus capable of monitoring a driving condition of at least one load device, the power control method including:
calculating a storage cell remaining amount to be ensured in case of a blackout by calculating the storage cell remaining amount on the basis of a predicted power demand of a load device to be used during a blackout and at least one of a degree of urgency and an incentive of a demand response request.

A power control system according to one of the embodiments of the present disclosure includes:
a power storage apparatus comprising a storage cell; and
a power control apparatus capable of monitoring a driving condition of at least one load device;
such that the power control apparatus comprises a controller configured to calculate a storage cell remaining amount to be ensured in case of a blackout, the controller calculating the storage cell remaining amount on the basis of a predicted power demand of a load device to be used during a blackout and at least one of a degree of urgency and an incentive of a demand response request.

### (Advantageous Effect)

A power control apparatus, a power control method, and a power control system according to the present disclosure can control a storage cell more economically with respect to the power supply state of the commercial power grid.

### BRIEF DESCRIPTION OF THE DRAWINGS

In the accompanying drawings:
FIG. 1 is a functional block diagram of a power control system according to one of the disclosed embodiments;
FIG. 2 illustrates a setting screen of assumed use load devices;
FIG. 3A illustrates the predicted power demand, the predicted power demand during a blackout, the predicted power generation, the predicted power generation during a blackout, the predicted power discharge, and the predicted power discharge during a blackout; FIG. 3B illustrates data corresponding to FIG. 3A (outside of a blackout); and FIG. 3C illustrates data corresponding to FIG. 3A (during a blackout); and
FIG. 4 is a flowchart of operations by the power control apparatus in FIG. 1.

### DETAILED DESCRIPTION

The following describes one of the embodiments of the present disclosure on the basis of the drawings.

### [System configuration]

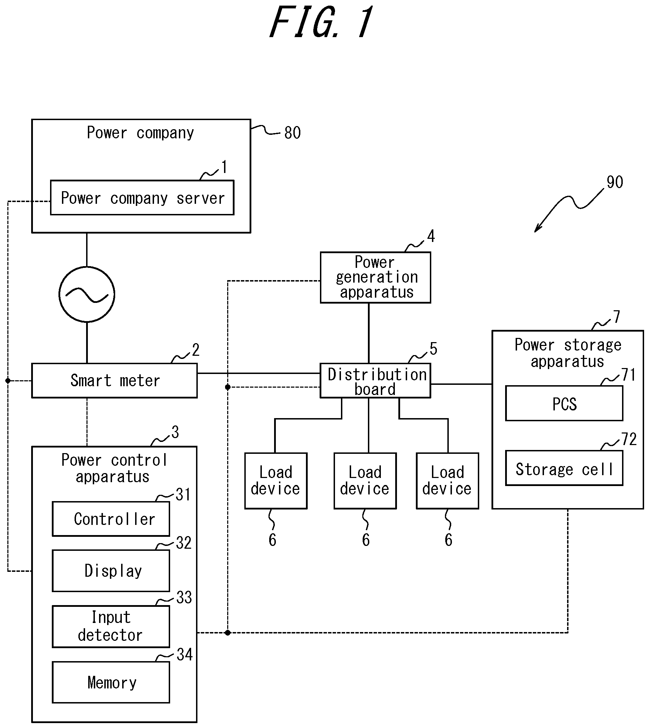

FIG. 1 is a functional block diagram of a power control system 90 according to one of the disclosed embodiments. The power control system 90 at least includes a power control apparatus 3 and a power storage apparatus 7. The power control system 90 may also include a power generation apparatus 4. The power control system 90 may include a smart meter 2, a distribution board 5, and load devices 6. In FIG. 1, control lines and information transmission lines are indicated by dashed lines, whereas power lines are indicated by solid lines. As one example, the power control system 90 in this embodiment is provided by a consumer's facility. Although the functions of the power control system 90 according to the present disclosure are described, it is to be noted that other functions included in the power control system 90 are in no way excluded.

A power company server 1 is provided internal to or external to a power company 80 by the power company 80 and issues demand response requests to the consumer's facility. An aggregator may be located between the power company server 1 and the consumer's facility and may issue the demand response requests.

The smart meter 2 measures the amount of power supplied to the distribution board 5 via the commercial power grid, to which the smart meter 2 is connected, and the amount of power sold to the commercial power grid by the consumer's facility. The smart meter 2 can notify the power company server 1 and the power control apparatus 3 of the measured amount of power via a network.

The power control apparatus 3 includes a controller 31, a display 32, an input detector 33, and a memory 34. The power control apparatus 3 is, for example, a Home Energy Management System (HEMS).

The controller 31 is, for example, a processor that controls the power control apparatus 3 overall, starting with the functional components of the power control apparatus 3. The controller 31 can monitor the driving condition of at least one load device 6, described below. The driving condition refers to the status of power consumption. The controller 31 at least calculates the storage cell remaining amount to be ensured in the storage cell 72 of the power storage apparatus 7 under normal conditions and in response to a demand response request. As described below, the controller 31 calculates the storage cell remaining amount in accordance with at least one of an incentive and a degree of urgency in a demand response request. In this embodiment, the controller 31 controls charging and discharging of the power storage apparatus 7 so as to ensure the calculated storage cell remaining amount.

The display 32 is, for example, configured by a Liquid Crystal Display (LCD) or an Organic Electroluminescence Display (OELD).

The input detector 33 may be any input interface that includes a mechanical push-button or a touch sensor. For example, for each load device 6, the input detector 33 receives input of the time during which the load device 6 is to be usable during a blackout (blackout response time).

The memory 34 is configured by using any memory resource, such as a flash memory. The memory 34 stores a variety of information, including programs for causing the power control apparatus 3 to operate, and also functions as a working memory. The memory 34 for example stores the blackout response time, the predicted power demand of the load device 6, and the predicted power generation of the power generation apparatus 4.

The power generation apparatus 4 is a photovoltaic power generation apparatus in this embodiment but may be another power generation apparatus such as a fuel cell apparatus, a micro wind power generation apparatus, or a micro thermal power generation apparatus. The photovoltaic power generation apparatus generates DC power by photoelectric conversion of sunlight received by a solar panel. Therefore, when using a photovoltaic power generation device as the power generation apparatus 4, the amount of power generation varies depending on the amount of sunlight received. For example, the amount of power generation varies on the basis of variation in the amount of sunlight, in accordance with the weather, and variation in the angle of incidence of sunlight, in accordance with the time of day.

The distribution board 5 supplies the power supplied from the commercial power grid, the power generation apparatus 4, or the power storage apparatus 7 to at least one load device 6. The distribution board 5 also supplies the power supplied from the commercial power grid or the power generation apparatus 4 to the power storage apparatus 7.

Each load device 6 is a power load that consumes power. Examples include a variety of electrical appliances used in a consumer's facility, such as an air conditioner, microwave oven, refrigerator, television, router, and the like. The load device 6 may also be machinery, lighting facilities, or the like, such as air conditioning equipment and lighting equipment, that are used in commercial and industrial facilities.

The power storage apparatus 7 includes a Power Conditioning System (PCS) 71 and a storage cell 72. On the basis of control by the power control apparatus 3, the power storage apparatus 7 performs charging and discharging of the storage cell 72. The power control apparatus 3 may also perform operations up to calculation of the storage cell remaining amount, with the PCS 71 of the power storage apparatus 7 controlling charging and discharging of the storage cell 72 to reach the storage cell remaining amount calculated outside of a blackout (i.e. during interconnection to the grid).

The PCS 71 includes an inverter, an AC/DC converter, a two-way DC/DC converter, and the like. The PCS 71 converts AC power supplied from the distribution board 5 to DC power and outputs this DC power to the storage cell 72 to charge the storage cell 72. Also, the PCS 71 converts DC power acquired from the storage cell 72 to AC power and outputs the AC power to the load devices 6 via the distribution board 5.

The storage cell 72 charges and discharges as a result of control by the power control apparatus 3. During a blackout, the storage cell 72 can charge with the excess power that is not consumed by the load devices 6 among the power generated by the power generation apparatus 4.

The following describes an embodiment of the present disclosure in greater detail.

The input detector 33 receives an operation from the consumer to set the blackout response time for each load device 6. The consumer can set the blackout response time while visually confirming the display 32 of the power control apparatus 3. The blackout response time may be zero. Therefore, the number of load devices 6 to be used during a blackout is also determined by the setting of the blackout response time. As an alternative example, the input detector 33 may receive an operation that sets the blackout response time to be the same for all of the load devices 6.

The blackout response time can be set for the regular time and for each level of a demand response request. The regular time refers to the time when no demand response request has been issued from the power company server 1, the aggregator, or the like. The level of the demand response request is determined by at least one of a degree of urgency and an incentive. As an example in this embodiment, the level of the demand response request is set to one of three ranks ("low", "medium", and "high"). At each rank for each load device 6, it is possible to set whether the load device is used instead of setting the blackout response time.

The input detector 33 outputs the received blackout response time to the controller 31. The controller 31 stores the received blackout response time in the memory 34.

As an alternative example, the consumer can also use a terminal capable of communicating with the power control apparatus 3 to set the blackout response time while visually confirming an image displayed on the display of the terminal with an application downloaded onto the terminal.

The controller 31 judges whether a demand response request has been issued from the power company server 1, the aggregator, or the like.

When judging that no demand response request has been made, the controller 31 does not perform the below-described demand response time control, but rather determines that the load devices 6 set by the consumer as load devices used at the regular time are assumed use load devices and determines the blackout response time set for each load device 6.

On the other hand, when judging that a demand response request has been made, the controller 31 performs demand response time control. Namely, the controller 31 first acquires, from the memory 34, setting information on the blackout response time in accordance with at least one of a degree of urgency and an incentive (fee) of the demand response request as follows and sets the assumed use load device(s) along with the blackout response time.

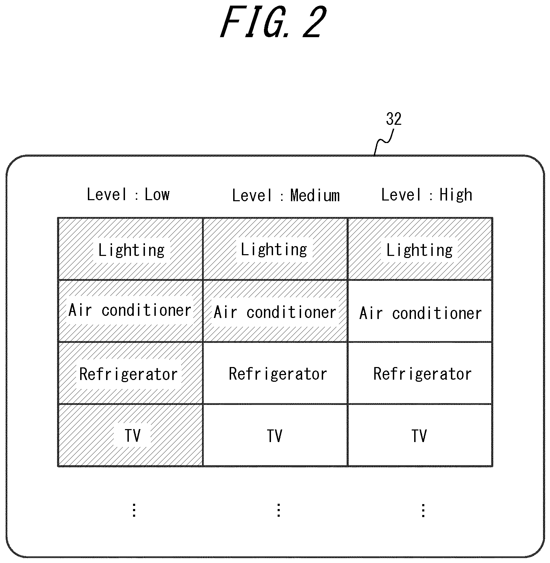

The assumed use load device(s) are the load device(s) 6 determined to be used during a blackout on the basis of the blackout response time set by the consumer. In other words, the assumed use load device(s) are load device(s) 6 for which the blackout response time is greater than zero. FIG. 2 illustrates an example of assumed use load devices set by the consumer.

As illustrated in the example in FIG. 2, the assumed use load devices when the demand response request level is "low" are lighting, air conditioner, refrigerator, and television. The assumed use load devices when the demand response request level is "medium" are lighting and air conditioner. Furthermore, the assumed use load device when the demand response request level is "high" is the lighting.

As a different function, when judging that a demand response request has been made, the controller 31 may provide notification of a plan for the blackout response time on the basis of at least one of the degree of urgency and the incentive of the demand response request. The controller 31 may provide notification of the plan to the consumer via the display 32, and the input detector 33 may receive input from the consumer regarding the notification. For example, when the degree of urgency or the incentive of the demand response is high, the controller 31 may cause the display 32 to display a plan that reduces the blackout response time set in advance by the consumer (for example, six hours) to four hours. The controller 31 acquires setting information on the blackout response time and determines the assumed use load device(s) and the blackout response time. As an alternative example, the controller 31 may determine the blackout response time on the basis of at least one of the degree of urgency and the incentive of the demand response request.

Whether a demand response request has been made or not, the controller 31 acquires power information after determining the assumed use load device(s) and the blackout response time. The power information at least includes power consumption information, acquired from the distribution board 5, on the load devices 6. The power information preferably further includes information on power generation acquired from the power generation apparatus 4 and information on the storage cell remaining amount acquired from the power storage apparatus 7. Furthermore, the power information may include information on power selling acquired from the smart meter 2 and information on charged and discharged power acquired from the power storage apparatus 7.

On the basis of the acquired power information, the controller 31 calculates a predicted power demand of the assumed use load devices during a blackout and a predicted power generation during a blackout. At this time, the controller 31 may calculate the predicted power generation on the basis of information on the predicted amount of sunlight acquired over a network from any server and information on the power generating capability of solar panels acquired over a network from the server of the manufacturer or the like.

When also taking into account the predicted power generation of the power generation apparatus 4 in the calculation of the storage cell remaining amount, the controller 31 calculates the predicted power generation of the power generation apparatus 4 (a photovoltaic power generation apparatus in this embodiment) on the basis of the amount of power that can be generated (rated power output in this embodiment) by the power generation apparatus 4 through independent operation during a blackout. The controller 31 for example acquires information on the amount of power that can be generated from the power generation apparatus 4.

The controller 31 may calculate the predicted power generation on the basis of the amount of power that can be charged in the storage cell 72 within the power storage apparatus from the power generation apparatus 4 during a blackout. The controller 31 for example acquires information on the amount of power that can be charged from the power storage apparatus 7.

Furthermore, the controller 31 may calculate the predicted power generation on the basis of at least one of a malfunction status and a maintenance operation schedule of at least one of the power generation apparatus 4 and the storage cell 72. The malfunction status and maintenance operation schedule are, for example, acquired by the power control apparatus 3 from the power generation apparatus 4 and the power storage apparatus 7.

On the basis of the predicted power demand, predicted power generation, storage cell information (for example, rated efficiency), and blackout response time, the controller 31 calculates the storage cell remaining amount to be ensured in case of a blackout.

After the calculation, the controller 31 sets the storage cell remaining amount to be ensured and performs charging/discharging control on the storage cell 72. In greater detail, the controller 31 stores the storage cell remaining amount to be ensured in the memory 34 and controls charging and discharging of the storage cell 72 from outside of the power storage apparatus 7 so that the storage cell remaining amount is ensured. The controller 31 may also set the storage cell remaining amount to be ensured in the power storage apparatus 7, and the PCS 71 of the power storage apparatus 7 may control the storage cell 72 so as to ensure the storage cell remaining amount.

When the power control apparatus 3 can control the selected load device(s) 6, the power control apparatus 3 performs control in accordance with the setting.

A concrete example of the above-described method for calculating the storage cell remaining amount is described below while comparing "outside of a blackout" with "during a blackout". As an example in this embodiment, the blackout response time of all of the assumed use load devices is described as being six hours from 12:00 to 18:00, and the rated efficiency is described as being 0.94. As an example in this embodiment, during a blackout, the power consumed by the assumed use load devices is described as being half of the power consumption by the load devices 6 used outside of a blackout, and during a blackout, the maximum amount of power that can be generated by the power generation apparatus 4 is described as being 1500 W.

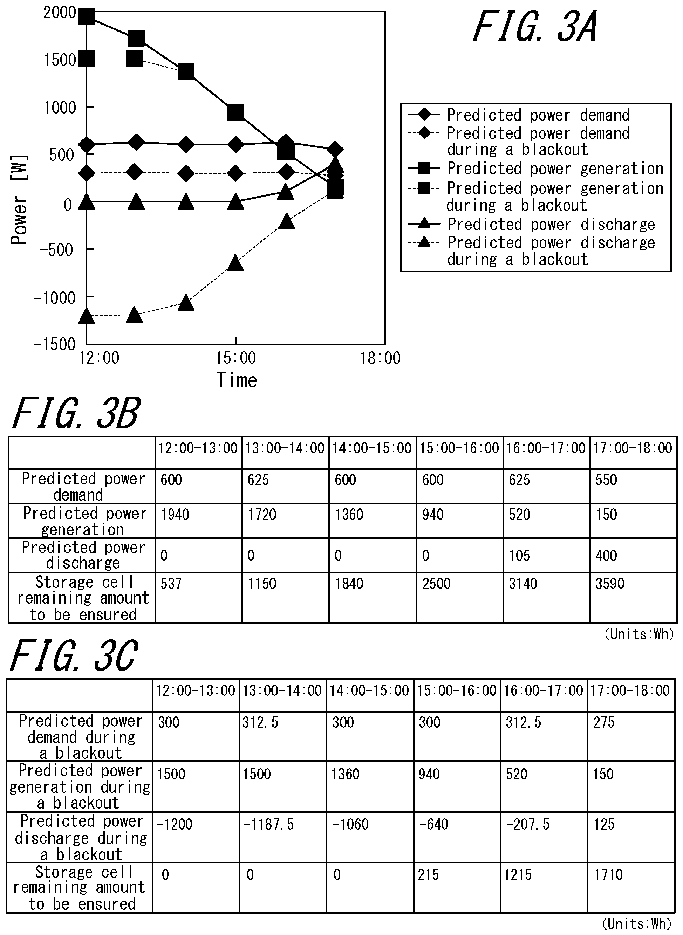

FIG. 3A illustrates the predicted power demand, predicted power generation, and predicted power discharge outside of a blackout with solid lines and the predicted power demand, predicted power generation, and predicted power discharge during a blackout (not complying with a demand response) with dashed lines. FIGS. 3B and 3C illustrate data corresponding to FIG. 3A. In a time slot in which the predicted power discharge during a blackout in FIG. 3C is a negative value, the storage cell 72 is charging with power in the amount by which the predicted power generation during a blackout exceeds the predicted power demand during a blackout.

As depicted in FIG. 3A, outside of a blackout (indicated by solid lines), the predicted power generation falls below the predicted power demand between 16:00 and 18:00. On the other hand, during a blackout (indicated by dashed lines), the power consumption of all of the assumed use load devices is half of the power consumption of the load devices 6 used outside of a blackout. Therefore, the predicted power demand during a blackout indicated by a dashed line is less than the predicted power demand indicated by the solid line, and the time when the predicted power generation during a blackout falls below the predicted power demand during a blackout is between 17:00 and 18:00. During this time, the controller 31 discharges the storage cell 72 to compensate for the shortage in the predicted power generation.

As described above, the dashed lines in FIG. 3A indicate the amount of power when the controller 31 is not complying with demand response during a blackout. It is noted that the predicted power demand of the assumed use load devices when the controller 31 is complying with demand response during a blackout is smaller than the predicted power demand when not complying with demand response, and that the predicted power demand of the assumed use load devices decreases as the level of the demand response rises.

The controller 31 calculates the storage cell remaining amount to be ensured as of 12:00 as the value yielded by dividing the total amount of power lacking during six hours starting from 12:00 (i.e. 12:00 to 18:00) by the rated efficiency. The amount of power lacking between 12:00 and 18:00 during a blackout is calculated on the basis of the total (0 in the case of a negative value) of the values yielded by subtracting the predicted power generation during a blackout from the predicted power demand during a blackout in each time slot (i.e. the "predicted power discharge during a blackout"). For example, as indicated in FIG. 3C, the total of the predicted power discharge during a blackout between 12:00 and 18:00 is -4170 Wh. At this time, the amount of power lacking between 17:00 and 18:00 is provided for by the amount of power charged between 12:00 and 17:00. Therefore, the storage cell remaining amount to be ensured as of 12:00 is 0 Wh.

Similarly, the controller 31 for example calculates a storage amount to be ensured for each hour. For example, the controller 31 calculates the storage cell remaining amount to be ensured as of 13:00 as the value yielded by dividing the total amount of power lacking during six hours starting from 13:00 (0 in the case of a negative value) by the rated efficiency. As illustrated in FIG. 3C, the storage cell remaining amount to be ensured as of 13:00 is also 0. The controller 31 also calculates the storage cell remaining amount to be ensured as of 14:00, 15:00, 16:00, and 17:00 similarly. A description of these cases is omitted.

As a result, the storage cell 72 is in a state of having ensured 0 Wh at 12:00, 13:00, and 14:00, and the excess storage cell remaining amount can be used to comply with demand response, thereby making the storage cell 72 more economic. The storage cell 72 is in a state of having ensured 215 Wh at 15:00. Also, the storage cell 72 is in a state of having ensured 1215 Wh at 16:00 and 1710 Wh at 17:00. As the level of the demand response rises, the predicted power demand of the assumed use load devices reduces, allowing a reduction in the storage cell remaining amount that is to be ensured. As a result, a larger storage cell remaining amount can be used to comply with demand response. As the level of the demand response increases, it is thought that the incentive will also increase. Hence, the improvement in economy is significant.

### [Operation flow]

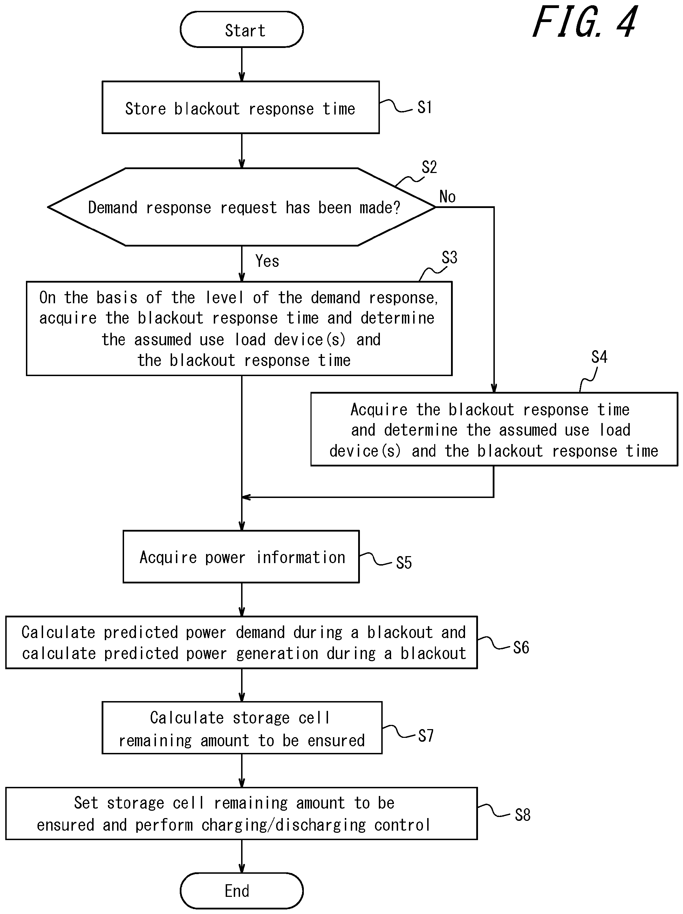

FIG. 4 is a flowchart of operations executed by the power control apparatus 3 in FIG. 1 at any time interval.

The power control apparatus 3 receives setting of the blackout response time from the consumer and stores the setting in the memory 34 (step S1). The power control apparatus 3 judges whether a demand response request has been made (step S2).

When judging that a demand response request has been made (step S2: Yes), then on the basis of the level of the demand response, the power control apparatus 3 acquires setting information on the blackout response time from the memory 34 and determines the assumed use load device(s) and the blackout response time (step S3). Conversely, when it is judged that no demand response request has been made (step S2: No), the power control system 90 acquires setting information on the blackout response time from the memory 34 and determines the assumed use load device(s) and the blackout response time (step S4).

Next, the power control apparatus 3 acquires power information from the smart meter 2, the power generation apparatus 4, the power storage apparatus 7, and the distribution board 5 (step S5). On the basis of the acquired power information, the power control apparatus 3 calculates the predicted power demand during a blackout and the predicted power generation during a blackout (step S6).

The power control apparatus 3 calculates the storage cell remaining amount to be ensured on the basis of the predicted power demand, the predicted power generation, storage cell information, and the blackout response time (step S7). The power control apparatus 3 sets the storage cell remaining amount to be ensured as calculated in step S7 and performs charging/discharging control on the storage cell 72 (step S8).

As described in the above embodiment, the controller 31 calculates the storage cell remaining amount to be ensured in case of a blackout by calculating on the basis of the predicted power demand of the load device(s) 6 to be used during a blackout and at least one of the degree of urgency and incentive of the demand response request. Therefore, the minimum remaining amount necessary to use the load device(s) 6 even when a blackout occurs can be calculated, thereby allowing the storage cell 72 to be utilized to the maximum in a state with the minimum necessary storage cell remaining amount. In other words, the consumer enjoys the economic benefit of being able to reduce the amount of power purchased during the day, thereby reducing the expenditure on power. Also, when a demand response request is issued, an emergency in the commercial power grid can be avoided by reducing the storage cell remaining amount to be ensured and discharging a larger amount of power. Furthermore, the consumer can obtain an incentive.

As described in the above embodiment, the controller 31 also calculates the predicted power generation on the basis of the amount of power that can be generated by the power generation apparatus 4 through independent operation at the time of a blackout. Therefore, even if the amount of power that can be generated by the power generation apparatus 4 differs, due to system limitations, depending on whether or not a blackout occurs, an accurate calculation can be made taking this fact into consideration.

As described in the above embodiment, the controller 31 also calculates the predicted power generation on the basis of the amount of power that can be charged in the storage cell 72 from the power generation apparatus 4 during a blackout. Due to system limitations, it may be impossible to charge the storage cell 72 with all of the power generated by the power generation apparatus 4 (or there may be a limit on the amount of power that can be charged). At this time, the predicted power generation is less than the amount of power generation outside of a blackout. Accordingly, an accurate calculation can be made by calculating the predicted power generation on the basis of this amount of power that can be charged.

Furthermore, as described in the above embodiment, the controller 31 calculates the predicted power generation on the basis of at least one of a malfunction status and a maintenance operation schedule of at least one of the power generation apparatus 4 and the storage cell 72. Therefore, an accurate calculation can be made taking into consideration whether power can be generated or charged.

Furthermore, as described in the above embodiment, the controller 31 provides notification of a plan for the blackout response time, for which the load device(s) 6 is to be usable during a blackout, on the basis of at least one of the degree of urgency and the incentive of the demand response request. This approach facilitates the avoidance of an emergency in the commercial power grid and the acquisition of an incentive.

Furthermore, as described in the above embodiment, the controller 31 determines the blackout response time, for which the load device(s) 6 is to be usable during a blackout, on the basis of at least one of the degree of urgency and the incentive of the demand response request and calculates the storage cell remaining amount on the basis of the blackout response time. At this time, an appropriate blackout response time in accordance with at least one of the degree of urgency and the incentive of the demand response request is determined, and the storage cell remaining amount is then calculated, thereby facilitating the avoidance of an emergency in the commercial power grid and the acquisition of an incentive.

Although an embodiment of the present disclosure has been described on the basis of drawings and examples, it is to be noted that various changes and modifications will be apparent to those skilled in the art on the basis of the present disclosure. Therefore, such changes and modifications are to be understood as included within the scope of the present disclosure. For example, the functions and the like included in the various members, units, steps, and the like may be reordered in any logically consistent way. Furthermore, when embodying a method according to the present disclosure, units or steps may be combined into one or divided.

The control of the present disclosure is described as a series of operations executed by a computer system and other hardware that can execute program instructions. Examples of the computer system and other hardware include a general-purpose computer, a Personal Computer (PC), a dedicated computer, a workstation, and other programmable data processing apparatuses. It is to be noted that in each embodiment, various operations are executed by a dedicated circuit (for example, individual logical gates interconnected in order to execute a particular function) implemented by program instructions (software), or by a logical block, program module, or the like executed by one or more processors. The one or more processors that execute a logical block, program module, or the like are, for example, one or more of each of the following: a microprocessor, a Central Processing Unit (CPU), an Application Specific Integrated Circuit (ASIC), a Digital Signal Processor (DSP), a Programmable Logic Device (PLD), a Field Programmable Gate Array (FPGA), a controller, a microcontroller, an electronic device, another apparatus designed to be capable of executing the functions disclosed herein, and/or a combination of any of the above. The disclosed embodiments are, for example, implemented by hardware, software, firmware, middleware, microcode, or a combination of any of these.

The network used here may, unless indicated otherwise, be the Internet, an ad hoc network, a Local Area Network (LAN), a cellular network, another network, or a combination of any of these.

### REFERENCE SIGNS LIST

- 1: Power company server
- 2: Smart meter
- 3: Power control apparatus
- 31: Controller
- 32: Display
- 33: Input detector
- 34: Memory
- 4: Power generation apparatus
- 5: Distribution board
- 6: Load device
- 7: Power storage apparatus
- 71: PCS
- 72: Storage cell
- 80: Power company
- 90: Power control system

## Claims

1. A power control apparatus capable of monitoring a driving condition of at least one load device, the power control apparatus comprising:
a controller configured to calculate a storage cell remaining amount to be ensured in case of a blackout, the controller calculating the storage cell remaining amount on the basis of a predicted power demand of the load device to be used during a blackout and at least one of a degree of urgency and an incentive of a demand response request.

2. The power control apparatus of claim 1, wherein the controller determines a load device to be used during the blackout on the basis of at least one of the degree of urgency and the incentive of the demand response request.

3. The power control apparatus of claim 1 or 2, wherein the controller is further configured to calculate the storage cell remaining amount on the basis of a predicted power generation of a power generation apparatus connected to the load device.

4. The power control apparatus of claim 3, wherein the predicted power generation is calculated on the basis of an amount of power that can be generated by the power generation apparatus through independent operation during the blackout.

5. The power control apparatus of claim 3 or 4, wherein the predicted power generation is calculated on the basis of an amount of power that can be charged in the storage cell from the power generation apparatus during the blackout.

6. The power control apparatus of any one of claims 3 to 5, wherein the predicted power generation is calculated based further on at least one of a malfunction status and a maintenance operation schedule of at least one of the power generation apparatus and the storage cell.

7. The power control apparatus of any one of claims 1 to 6, wherein the controller is further configured to acquire setting information on a blackout response time for which the load device is to be usable during the blackout and to calculate the storage cell remaining amount on the basis of the setting information.

8. The power control apparatus of claim 7, wherein the controller provides notification of a plan for the blackout response time on the basis of at least one of the degree of urgency and the incentive of the demand response request.

9. The power control apparatus of any one of claims 1 to 6, wherein the controller determines a blackout response time for which the load device is to be usable during the blackout on the basis of at least one of the degree of urgency and the incentive of the demand response request and calculates the storage cell remaining amount on the basis of the blackout response time.

10. A power control method used in a power control apparatus capable of monitoring a driving condition of at least one load device, the power control method including:
a calculating step of calculating a storage cell remaining amount to be ensured in case of a blackout by calculating the storage cell remaining amount on the basis of a predicted power demand of a load device to be used during a blackout and at least one of a degree of urgency and an incentive of a demand response request.

11. The power control method of claim 10, wherein in the calculating step, a load device to be used during the blackout is determined on the basis of at least one of the degree of urgency and the incentive of the demand response request.

12. The power control method of claim 10 or 11, wherein in the calculating step, a blackout response time for which the load device is to be usable during the blackout is determined on the basis of at least one of the degree of urgency and the incentive of the demand response request.

13. A power control system comprising:
a power storage apparatus comprising a storage cell; and
a power control apparatus capable of monitoring a driving condition of at least one load device;
wherein the power control apparatus comprises a controller configured to calculate a storage cell remaining amount to be ensured in case of a blackout, the controller calculating the storage cell remaining amount on the basis of a predicted power demand of a load device to be used during a blackout and at least one of a degree of urgency and an incentive of a demand response request.

14. The power control system of claim 13, wherein the controller determines a load device to be used during a blackout on the basis of at least one of the degree of urgency and the incentive of the demand response request.

15. The power control system of claim 13 or 14, wherein the controller determines a blackout response time for which the load device is to be usable during the blackout on the basis of at least one of the degree of urgency and the incentive of the demand response request.
